Europäisches Patentamt

European Patent Office

Office européen des brevets

(11) Numéro de publication: **0 331 544**
**A1**

## (12) DEMANDE DE BREVET EUROPEEN

(21) Numéro de dépôt: **89400366.4**

(22) Date de dépôt: **09.02.89**

(51) Int. Cl.⁴: **G 01 C 21/20**
**G 06 G 1/00**

(30) Priorité: **01.03.88 FR 8802527**

(43) Date de publication de la demande:
**06.09.89 Bulletin 89/36**

(84) Etats contractants désignés: **DE FR GB**

(71) Demandeur: **Poirier, Alain**
**16, Boulevard Flandrin**
**F-75116 Paris (FR)**

(72) Inventeur: **Poirier, Alain**
**16, Boulevard Flandrin**
**F-75116 Paris (FR)**

(74) Mandataire: **Marquer, Francis et al**
**Cabinet Moutard 35, Avenue Victor Hugo**
**F-78960 Voisins le Bretonneux (FR)**

(54) **Dispositif permettant la lecture directe, sur une carte, du cap à suivre par un véhicule aérien ou nautique.**

(57) Le dispositif selon l'invention fait intervenir un disque (102) muni, à sa périphérie, d'une graduation circulaire coaxiale (110) de type "rose des vents", mobile en rotation relativement à ce disque (102), ce dernier étant lui-même monté rotatif autour d'un axe fixe (103) solidaire d'un support (101), par l'intermédiaire d'un montage rotatif à excentration réglable en module et en orientation. Le disque (102) comporte en outre une échelle rectiligne (106) servant à déterminer le module de l'excentration, ainsi qu'un repère (107) servant à indiquer l'orientation de cette excentration sur la graduation circulaire (110). L'échelle (106) est graduée selon des valeurs successives représentatives du rapport vitesse vent (ou courant)/vitesse propre du véhicule.

L'invention permet une lecture directe sans calcul et avec un minimum de manipulation, du cap à suivre du véhicule.

FIG.1

## Description

### DISPOSITIF PERMETTANT LA LECTURE DIRECTE, SUR UNE CARTE, DU CAP A SUIVRE PAR UN VEHICULE AERIEN OU NAUTIQUE

La présente invention concerne un dispositif permettant la lecture directe, sur une carte, du cap à suivre par un véhicule aérien ou nautique et du temps estimé que doit mettre ce véhicule pour effectuer un trajet entre deux repères géographiques. ces informations étant obtenues sans avoir à effectuer de calcul de correction de dérive et de déclinaison magnétique.

Il convient de noter tout d'abord que le "temps estimé" précédemment évoqué est le temps réellement mis par le véhicule, compte tenu de phénomènes tels que le vent ou des courants maritimes, par opposition au temps sans vent ou sans courant.

Par ailleurs, la "route sol" en navigation aérienne, ou "route fond" en navigation maritime, est la route effectuée par rapport au sol (ou au fond) et, en conséquence, sur la carte. C'est donc la route que l'on se fixe comme objectif.

La présence du vent (ou du courant) oblige, pour suivre la même route à effectuer, une correction de dérive et à suivre un cap fictif appelé "cap vrai", qui est l'angle formé par l'axe du véhicule avec le Nord géographique. On rappelle à ce sujet que le "cap magnétique" est le cap par rapport au Nord magnétique ; il se déduit du "cap vrai" par addition de la déclinaison magnétique.

Le calcul du "cap vrai" est réalisé par composition vectorielle des vecteurs "vitesse vent", "vitesse propre" du véhicule (détectée par rapport à l'air ou à l'eau). et "vitesse sol" ou "vitesse fond" ; cette composition est habituellement appelée "triangle des vitesses".

Ces vecteurs sont de types glissants, c'est-à-dire que leur point d'application est mobile et n'est donc pas défini.

Dans un système orthonormé, ces vecteurs sont alors définis par leurs arguments (angle formé par une direction de référence et la direction du vecteur) et leur module. Ainsi :
- le vecteur "vitesse vent" aura pour argument la direction du vent et, pour module, la valeur absolue de la vitesse vent, ces deux informations constituant des données ; - le vecteur "vitesse propre" aura pour argument le "cap vrai" du véhicule qui est une inconnue et, pour module, la valeur absolue de la vitesse du véhicule par rapport à l'air (ou à l'eau) qui constitue une donnée ;
- le vecteur "vitesse sol" aura pour argument la "route sol" (ou fond) qui est une donnée et, pour module. une valeur constituant une inconnue.

Ce système vectoriel comprend donc quatre données et deux inconnues.

L'invention a donc plus particulièrement pour objet un dispositif permettant d'effectuer cette composition vectorielle, de manière à pouvoir faire une lecture directe du cap vrai, en réduisant au strict minimum toute manipulation et en supprimant tout calcul.

Elle part de la constatation qu'il est possible de diviser chacun des modules des vecteurs de la composition vectorielle précitée, sans changer les arguments, et qu'en divisant chacun de ces modules par la valeur absolue de la vitesse propre du véhicule, on peut utiliser une composition vectorielle équivalente, dans laquelle le vecteur correspondant à la vitesse propre est un vecteur unitaire, tandis que le module du vecteur correspondant au vecteur vitesse vent (vecteur vitesse relative) est égal au rapport

$$\frac{\text{vitesse vent}}{\text{vitesse propre}}.$$

Il est clair que, compte tenu du fait que l'on connaît le module et l'orientation du vecteur vitesse vent relative, le module du vecteur unitaire (argument, vitesse propre) et l'orientation de la vitesse sol, il devient possible d'effectuer une construction géométrique de la composition vectorielle, à partir de laquelle le cap vrai du véhicule pourra se lire directement.

Pour parvenir à ce résultat, le dispositif selon l'invention fait intervenir un disque muni, à sa périphérie, d'une graduation circulaire coaxiale de type rose des vents, mobile en rotation, ce disque étant lui-même monté rotatif autour d'un axe fixe solidaire d'un support, par l'intermédiaire d'un montage rotatif à excentration réglable en module et en orientation, ledit disque comportant en outre une échelle rectiligne servant à déterminer le module de l'excentration, ainsi qu'un premier repèreservant à indiquer l'orientation de cette excentration sur la graduation circulaire, ladite échelle étant graduée selon des graduations représentatives de valeurs successives du susdit rapport

$$\frac{\text{vitesse vent}}{\text{vitesse propre}}$$

du véhicule.

La mise en oeuvre de ce dispositif comprend alors les phases opératoires suivantes :
- la détermination du rapport

$$\frac{\text{vitesse vent}}{\text{vitesse propre}},$$

par exemple à l'aide d'un abaque ;
- le réglage de l'excentration du disque selon la valeur du rapport précédemment obtenu, l'orientation de cette excentration étant déterminée en pointant le premier repèresur une valeur de la graduation circulaire correspondant à l'orientation du vent (donnée météo) ;
- l'orientation du zéro de la graduation circulaire sur le Nord ; et
- la lecture du cap vrai qui se trouve indiqué sur la graduation circulaire par une droite orientée selon le cap géographique et passant par le susdit axe.

Avantageusement, le susdit dispositif pourra en outre comprendre un second repère mobile en rotation autour du disque, indépendamment de la susdite graduation circulaire, cet index étant destiné à être orienté selon le Nord géographique. Ainsi, lors de la phase d'orientation de la graduation circulaire, l'opérateur pourra, dans un premier temps, orienter cet index selon le Nord géographique puis, dans un deuxième temps, faire tourner la graduation circulaire pour obtenir, entre le zéro de cette graduation et l'index, un écart angulaire correspondant à la déclinaison magnétique. Le cap vrai, lu sur le dispositif, aura pour référence le Nord magnétique.

Par ailleurs, le support pourra lui-même comprendre des moyens permettant d'assurer son alignement sur le cap géographique et des moyens permettant d'indiquer sur la graduation circulaire le cap vrai, une fois ledit alignement effectué.

Des modes de réalisation de l'invention seront décrits ci-après, à titre d'exemples non limitatifs, avec référence aux dessins annexés dans lesquels :

La figure 1 représente, vu de dessus, un premier mode d'exécution d'un dispositif selon l'invention pour la lecture du cap à suivre d'un aérodyne ;

La figure 2 est une représentation schématique mettant en relief la composition vectorielle à partir de laquelle est effectuée la détermination du cap vrai dans le dispositif selon la figure 1 ;

La figure 3 montre des adaptations à effectuer au dispositif représenté sur la figure 1, dans le cas d'un véhicule nautique ;

La figure 4 est une variante du dispositif représenté sur la figure 1, qui utilise un autre mode de détermination du temps estimé ;

La figure 5 illustre une variante du mode d'excentration du disque, utilisable dans un dispositif tel que celui représenté figure 1.

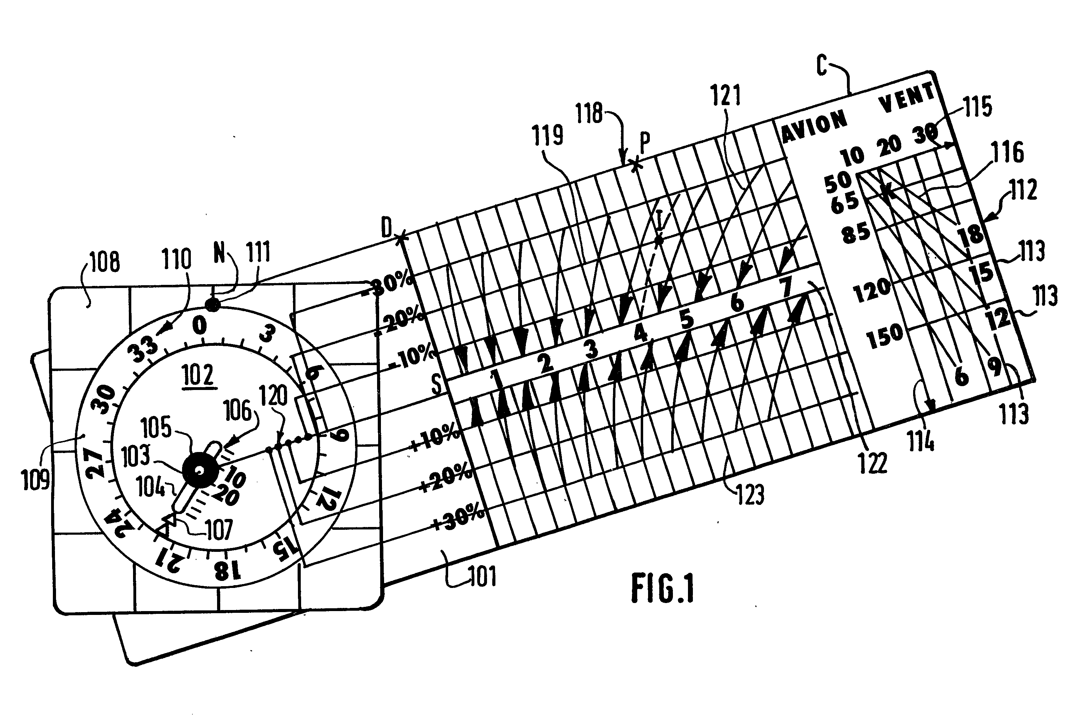

Tel que représenté sur la figure 1, le dispositif se compose tout d'abord d'un support plat 101, de forme rectangulaire, réalisé en matière transparente souple, dépolie sur sa face supérieure de manière à permettre l'écriture au crayon et l'effaçage à la gomme.

Sur ce support 101 est monté rotatif, avec excentration réglable, un disque 102 également réalisé en matière transparente.

Ce montage rotatif fait plus particulièrement intervenir un axe 103 passant au travers d'un perçage réalisé dans le support et d'un évidement radial 104, de forme oblongue, réalisé dans le disque 102, sensiblement depuis le centre de ce disque 102 jusqu'à sa périphérie. Ce montage fait en outre intervenir un dispositif de blocage 105 associé à l'axe 103, de manière à permettre un maintien du disque 102 dans la position choisie avec une excentration dont la valeur absolue est repérée grâce à une échelle 106 associée à l'évidement 104, et dont l'orientation est définie grâce à un repère 107 situé à la périphérie du disque 102.

Par ailleurs, sur la périphérie du disque 102 sont montées rotatives deux couronnes transparentes concentriques 108, 109, de même diamètre interne, qui sont superposées et mobiles l'une par rapport à l'autre avec un frottement sec.

La couronne 108 présente un pourtour extérieur de forme carrée et comprend un quadrillage avec indication du Nord géographique N, pour son orientation sur une carte.

La couronne 109, qui présente un pourtour extérieur circulaire, de diamètre inférieur au côté de la susdite forme carrée, comporte une rose des vents 110 graduée, dans cet exemple, de 0 à 360°.

Un système de blocage 111 permet de solidariser les deux couronnes 108, 109 dans une position angulaire relative désirée (en pratique, cette position angulaire relative correspond à la déclinaison magnétique).

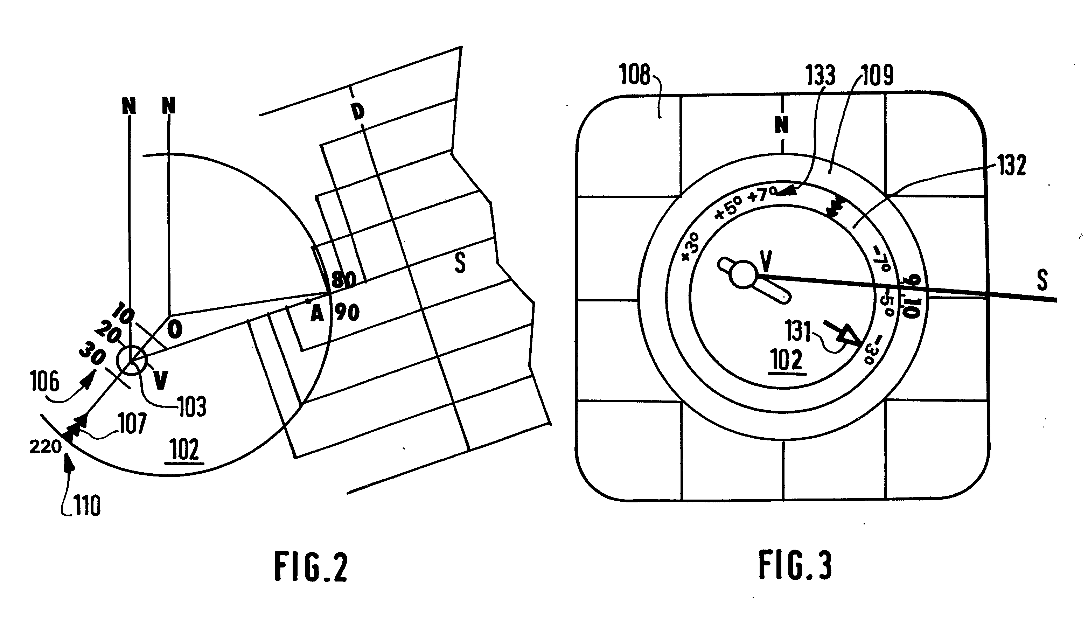

Tel qu'illustré sur la figure 2, le principe de fonctionnement du dispositif précédemment décrit est alors le suivant :

Sur cette figure 2, le segment OV compris entre le centre O du disque 102 et l'axe 103, constitue en fait le vecteur vitesse relative. Son module qui est en fait l'excentration du disque 102 est déterminé par le rapport

$$\frac{\text{vitesse vent}}{\text{vitesse propre}}.$$

A cet effet, l'invention propose d'utiliser, pour effectuer cette détermination, un abaque 112 inscrit sur le support qui fournit un nombre guide 113 correspondant à chacune des valeurs de ce rapport. Parallèlement, l'échelle 106, associée à l'évidement oblong 104, sera graduée en nombre guide 113.

D'une façon plus précise, cet abaque comprend en ordonnée (axe 114) les vitesses propres du véhicule, en abscisse (axe 115) les vitesses de vent, ainsi qu'une série de courbes 116 reliant les points correspondant au même rapport

$$\frac{\text{vitesse vent}}{\text{vitesse propre}},$$

, chacune de ces courbes 116 étant affectée d'un nombre guide 113 correspondant au produit du facteur de base par la vitesse du vent exprimée en noeuds.

Il convient de préciser à ce sujet que les valeurs des vitesses figurant en ordonnée et en abscisse sont exprimées selon les unités habituelles, par exemple en facteur de base (temps mis pour parcourir un mille nautique), en noeud ou en kilomètre/heure.

L'orientation du segment OV correspond à l'orientation du vent (angle NOV = gisement du vent). Elle est ajustée en faisant tourner le disque 102 jusqu'à ce que l'index 107 parvienne à la valeur souhaitée indiquée sur la graduation de la rose des vents 110.

Le segment OA constitue le susdit vecteur unitaire (correspondant à la vitesse propre). Son module est choisi égal au rayon du disque 102, tandis que son orientation constitue une inconnue.

Le segment AV représente le vecteur vitesse sol dont le module constitue une inconnue et dont l'orientation correspond au cap géographique tracé sur la carte.

Le cap vrai du véhicule est alors obtenu, après avoir construit le triangle OAV, par lecture de l'angle NOA, ON matérialisant la direction du Nord (il peut consister en le Nord géographique, corrigé de la déclinaison magnétique).

Il convient de noter que le support 101 porte en outre un second abaque 118 comprenant une série de traits 119 parallèles au grand côté du support 101, ces traits 119 correspondant chacun à un rapport de correction du temps de vol (indiqués en pourcentages) ; chaque trait 119 est relié à un repère 120 sur l'axe VS qui correspond à une intersection de la rose des vents 110 avec VS (VS étant une droite inscrite sur le support 1 qui passe par l'axe 103 et est parallèle au grand côté C du support). Cet abaque 118 comprend en outre une série de courbes 121 reliant les points correspondant à une même durée de vol.

Sur l'axe médian de l'abaque, correspondant au temps estimé sans vent, est placée une réglette amovible 122 graduée en temps de vol. Cette réglette 122 fait partie d'un jeu de réglettes dans lequel chacune des réglettes est graduée pour une vitesse propre et une échelle de carte déterminées.

L'utilisation du dispositif précédemment décrit est alors la suivante :
. l'opérateur procède tout d'abord à la mise en place de la réglette adéquate 122, affiche ensuite la déclinaison magnétique par une rotation relative appropriée des deux couronnes 108, 109, puis assure le blocage de cet affichage grâce au système de blocage 111 ;
. l'opérateur détermine ensuite le nombre guide 113 grâce à l'abaque 112, puis règle l'excentration du disque 102 en amenant l'axe 103 au droit de la graduation de l'échelle 106 correspondant à ce nombre guide, l'orientation de l'excentration étant réglée grâce au repère 107 qui est placé au droit de la graduation de la rose des vents 110 qui correspond au gisement du vent ; à ce stade, le dispositif est prêt pour la lecture de n'importe quelle route.

A cet effet :
. l'opérateur place le support 101 sur la carte, de telle manière que le repère D coïncide avec le point de départ, et que le point à atteindre P soit sur le même grand côté ; puis
. l'opérateur oriente la couronne 108 munie du quadrillage selon le Nord géographique (en faisant en même temps tourner la couronne 109 qui lui est solidaire).

La lecture du cap à suivre peut alors se lire sur la graduation circulaire (à son intersection avec la droite VS).

Pour lire le temps de vol, on prend l'intersection de la ligne verticale 123 de l'abaque 118 passant par le point à atteindre P avec la ligne 119 du rapport de correction définie par l'intersection de la bordure du disque 102 sur l'axe VS, puis on lit sur la courbe passant par ce point I (ou par extrapolation) le chiffre (4) indiqué sur la réglette 122.

Dans la variante représentée figure 3, qui s'adresse à la navigation maritime, l'index 131, définissant l'orientation de l'excentration du disque 102, sert à afficher la direction où porte le courant et non plus le gisement du vent. Par ailleurs, le dispositif comprend une couronne additionnelle 132, concentrique au disque 102, et mobile en rotation avec un frottement sec. Elle porte les indications de correction de cap 133 suivant le gisement du vent, noté par l'utilisateur en fonction des caractéristiques de son navire, sur sa surface supérieure qui est, à cet effet, dépolie.

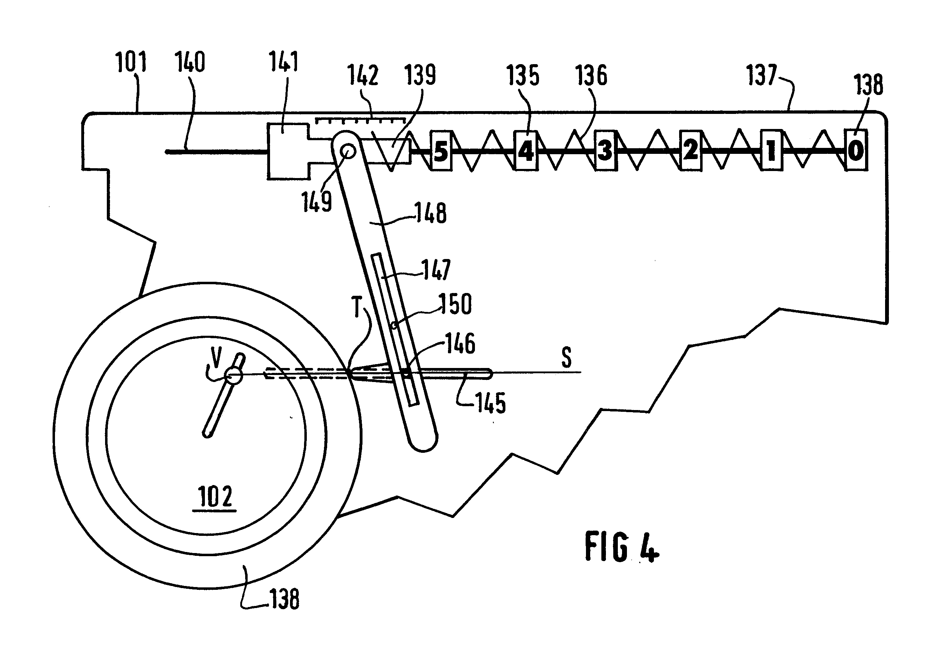

La figure 4 illustre une autre variante du dispositif selon l'invention, qui utilise un système de lecture du temps estimé ne faisant pas intervenir de réglette 122, ni d'abaque 118.

Dans cet exemple, le temps estimé est lu sur une échelle de temps variable, formée par une série de marques 135 solidaires d'un ressort 136 axé parallèlement à un grand côté 137 du support 101 et dont un point d'appui est mobile. La position de ce point d'appui est variable en fonction de la position sur l'axe VS de la périphérie (intersection T) de la couronne quadrillée 138 qui présente un pourtour circulaire, position qui est elle-même fonction du rapport

$$\frac{\text{vitesse sol}}{\text{vitesse propre}}$$

du véhicule (du fait de la décentration du disque 102).

D'une façon plus précise, les marques 135 comportent des indications en temps et sont fixées sur le ressort 136 en des emplacements uniformément répartis. L'une des extrémités 138 du ressort 136 est fixée sur le support 101, tandis que l'autre extrémité est solidaire d'un coulisseau 139 mobile le long d'un guide rectiligne 140 solidaire du support 101. Un dispositif de réglage 141 incorporé au coulisseau 139 permet d'ajuster la position du coulisseau 139 le long du guide 140 et, en conséquence, de définir l'espacement initial des marques 135. Une échelle 142 associe chaque position du coulisseau 139 à un temps tenant compte de la vitesse propre du véhicule et de l'échelle de la carte.

Les marques 135 comportent plusieurs séries de chiffres, la sélection de la série adéquate pouvant être effectuée, par exemple, par rotation d'un profilé transparent à section interne polyédrique, dans lequel coulissent les marques 135 qui présentent alors des formes extérieures de section complémentaire.

Ce dispositif fait, par ailleurs, intervenir un système de couplage liant la position du coulisseau 139 à la position du point d'intersection T de la périphérie de la couronne 138 et de l'axe VS.

Dans l'exemple représenté, ce système de couplage fait intervenir une saignée oblongue 145 qui s'étend le long de l'axe VS et au travers de laquelle passe un axe 146.

Cet axe 146 passe également au travers d'une fente longitudinale 147 d'un levier 148, dont une extrémité 149 vient s'articuler au coulisseau 139.

Au travers de la fente 147 passe également un axe 150 solidaire du support 101.

L'axe 146 est destiné à venir s'appliquer à la périphérie de la couronne 138, grâce à l'élasticité du ressort 136.

De ce fait, une variation de la position du point d'intersection T de la périphérie de la couronne 138 avec l'axe VS (matérialisé par la saignée 145) entraînera un basculement du levier 148. Ce basculement provoquera alors un déplacement du coulisseau 139 qui modifiera la position relative des marques 135.

Bien entendu, l'invention ne se limite pas à ce mode de couplage, étant entendu qu'il serait possible de prévoir un système apte à assurer une translation du coulisseau 139 proportionnellement aux variations de positions du point d'intersection T, par exemple grâce à un système de pignons ou une vis à grand pas.

Il convient de noter que la situation de l'extrémité fixe du ressort 136 (marque O) qui correspond au repère D, ainsi que le côté de lecture du cap sur l'axe VS, dépendent du type de ressort 136 et du dispositif de couplage utilisé.

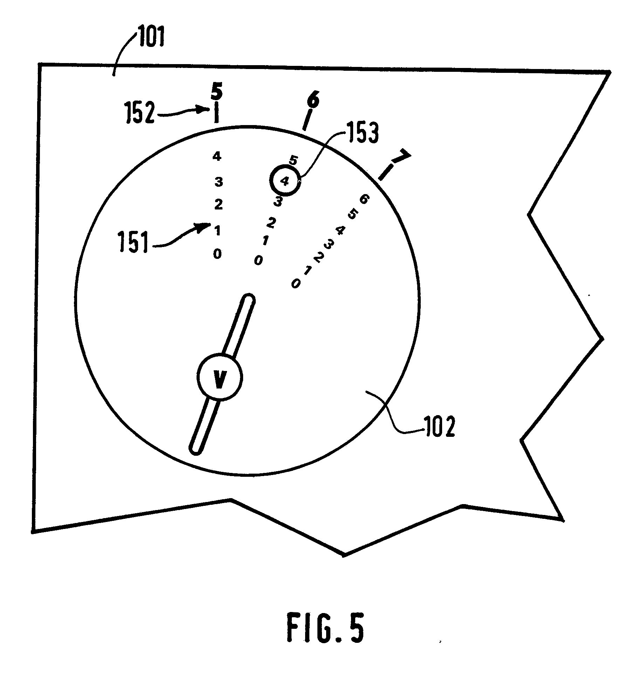

La figure 5 illustre une variante d'exécution du dispositif selon l'invention, dans lequel le réglage de l'excentricité du disque 102 peut être effectué directement sans avoir à expliciter le rapport vitesse vent (ou courant).

Ce dispositif fait intervenir une famille d'échelles 151 portées sur le support 101 (ou sur un support solidaire de l'excentrique), sous le disque 102, chaque échelle étant identifiée par une vitesse propre du véhicule (chiffres 152). Chaque échelle 151 comporte des marques indiquant la vitesse du vent ou du courant. Le réglage de l'excentricité peut alors être effectué en amenant un repère 153 formé sur le disque 102, au droit de la marque correspondant à la vitesse propre et à la vitesse du vent (ou du courant).

De la description qui précède, il ressort que l'invention permet de simplifier considérablement la navigation aérienne ou maritime, ainsi que les relèvements (l'axe 103 étant alors placé au centre du disque 102).

**Revendications**

1. Dispositif permettant la lecture directe, sur une carte, du cap à suivre par un véhicule aérien ou nautique, caractérisé en ce qu'il fait intervenir un disque (102) muni, à sa périphérie, d'une graduation circulaire coaxiale (110) de type "rose des vents", mobile en rotation relativement au disque (102) de manière à pouvoir être orientée par rapport au Nord, ce disque étant lui-même monté rotatif autour d'un axe fixe (103) solidaire d'un support (101), par l'intermédiaire d'un montage rotatif à excentration réglable en module en fonction d'une valeur représentative du rapport vitesse vent (ou courant)/vitesse propre du véhicule, et en orientation selon la direction du vent (ou du courant), ledit disque (102) comportant en outre au moins une échelle (106) servant à déterminer le module de l'excentration, ainsi qu'un repère (107) servant à indiquer l'orientation de cette excentration sur la graduation circulaire (110), ladite échelle étant graduée selon des valeurs successives représentatives du rapport vitesse vent (ou courant)/vitesse propre du véhicule, le cap à suivre étant indiqué sur la graduation circulaire (110) par une droite (VS) orientée selon le cap géographique (ou route) et passant par le susdit axe (103).

2. Dispositif selon la revendication 1, caractérisé en ce que sa mise en oeure comprend :
- la détermination d'un nombre guide correspondant au rapport

$$\frac{\text{vitesse vent}}{\text{vitesse propre}}$$

, par exemple à l'aide d'un abaque (112) inscrit sur le support (101) ;
- le réglage de l'excentration du disque (102) selon le nombre précédemment obtenu, l'orientation de cette excentration étant déterminée en pointant le premier repère sur une valeur de la graduation circulaire correspondant à l'orientation du vent ou du courant (donnée météo) ;
- l'orientation du zéro de la graduation circulaire (110) sur le Nord ; et
- la lecture du cap vrai qui se trouve indiqué sur la graduation circulaire (110) par une droite (VS) orientée selon le cap géographique ou route et passant par le susdit axe (103).

3. Dispositif selon la revendication 1, caractérisé en ce qu'il comprend des premiers moyens (105) permettant d'effectuer un blocage du disque (102) sur son support (101).

4. Dispositif selon l'une des revendications précédentes, caractérisé en ce qu'il comprend, en regard de la graduation circulaire (110), un index (couronne 108) mobile en rotation autour du disque (102), indépendamment de ladite graduation circulaire (110), cet index (108) étant destiné à être orienté sur le cap géographique.

5. Dispositif selon la revendication 4, caractérisé en ce qu'il comprend des seconds moyens de blocage de la position relative de la graduation circulaire (110) et dudit index (108), avec un écart angulaire pouvant correspondre à la déclinaison magnétique.

6. Dispositif selon l'une des revendications 4 et 5, caractérisé en ce que la susdite graduation circulaire (110) et le susdit index sont portés par deux couronnes respectives (108, 109) disposées l'une sur l'autre coaxialement au disque (102), et montées rotatives à la périphérie du disque (102)

7. Dispositif selon l'une des revendications précédentes,
caractérisé en ce que le susdit support (101) comprend une bordure rectiligne (C) apte à être alignée sur un cap géographique tracé sur une carte, et porte un axe (VS) parallèle à ladite bordure (C) et passant par ledit axe (103).

8. Dispositif selon l'une des revendications précédentes,
caractérisé en ce que le susdit support (101) porte un abaque (118) permettant de lire le temps de vol (ou de navigation) en fonction de la distance comprise entre deux points d'une carte, de la vitesse propre, de l'échelle de la carte et d'un rapport de correction du temps de vol (ou de navigation).

9. Dispositif selon l'une des revendications 7 et 8, caractérisé en ce que le rapport de correction du temps de vol (ou de navigation) est déterminé par la position du point d'intersection (T) de l'axe (VS) avec le bord du disque (102) (ou d'un élément circulaire coaxial à ce disque).

10. Dispositif selon l'une des revendications 8 et 9, caractérisé en ce que le susdit abaque comprend une première série de traits (119) parallèles à l'axe (VS) qui correspondent chacun à un rapport de correction du temps de vol (ou de navigation), chaque trait étant relié à un repère (120) qui correspond à une intersection de l'axe (VS) et du bord du disque (102), une seconde série de traits parallèles (123) recoupant ceux de la première série et qui correspondent à des distances, une série de courbes (121) reliant les points correspondant à une même durée de vol (ou de navigation) et une réglette amovible (122) graduée en temps de vol (ou de navigation), cette réglette (122) faisant partie d'un jeu de réglettes dans lequel chacune des réglettes est graduée pour une vitesse propre et une échelle de carte déterminées.

11. Dispositif selon l'une des revendications précédentes,
caractérisé en ce que, dans le cas où il s'applique à la navigation maritime, le repère (107) définissant l'orientation de l'excentration du disque (102) sert à afficher la direction où porte le courant, et en ce qu'il comprend en outre une couronne additionnelle (132), concentrique au disque (102) et mobile en rotation, cette couronne additionnelle portant des indications de correction de cap (133) suivant le gisement du vent.

12. Dispositif selon l'une des revendications 7 et 9, caractérisé en ce que le temps de vol (ou de navigation) estimé est lu sur une échelle de temps variable, formée par une série de marques (135) solidaires d'un ressort (136) axé parallèlement à un grand côté (137) du support (101) et dont un point d'appui est mobile et varie en fonction de la position sur l'axe (VS) de la périphérie du disque (102) ou d'un élément circulaire coaxial à ce disque.

13. Dispositif selon la revendication 12, caractérisé en ce qu'il comprend un coulisseau (139), mobile le long d'un guide rectiligne (140) solidaire du support (101), ce coulisseau constituant le point d'appui mobile du ressort (136), et un système de couplage liant la position du coulisseau (139) à la position du point d'intersection (T) de la périphérie du disque (ou d'un élément circulaire coaxial à ce disque) et du susdit axe (VS).

14. Dispositif selon la revendication 13, caractérisé en ce que le susdit système de couplage fait intervenir une saignée oblongue (145) qui s'étend le long de l'axe (VS) et au travers de laquelle passe un axe (146), lequel passe également au travers d'une fente longitudinale (147) d'un levier (148) dont une extrémité (149) vient s'articuler au coulisseau (139), et en ce qu'au travers de cette fente (147) passe en outre un axe (150) solidaire du support (101).

15. Dispositif selon l'une des revendications précédentes,
caractérisé en ce que le réglage de l'excentricité du disque (102) fait intervenir une famille d'échelles (151) portées par le support, ou solidaire de l'excentrique, chaque échelle étant identifiée par une vitesse propre du véhicule et comportant des marques indiquant la vitesse du vent ou du courant, et en ce que le susdit réglage s'obtient en amenant un repère (153) au droit de la marque correspondant à la vitesse propre et à la vitesse du vent (ou du courant).

FIG.1

FIG.2

FIG.3

EP 0 331 544 A1

FIG 4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 228 641 (HILL) <br> * Figure 1; revendication 1 * <br> --- | 1 | G 01 C 21/20 <br> G 06 G 1/00 |
| A | US-A-3 829 658 (NEWMAN) <br> * Figure 1; résumé; revendication 1 * <br> --- | 1,2 | |
| A | US-A-2 449 342 (TARDIF) <br> * Figures 1,2a; colonne 4, lignes 6-41 * <br> --- | 1,2 | |
| A | US-A-1 969 939 (NELSON) <br> * Figure 1; revendication 1 * <br> ----- | 1 | |

DOMAINES TECHNIQUES
RECHERCHES (Int. Cl.4)

G 01 C
G 06 G

Le présent rapport a été établi pour toutes les revendications

| Lieu de la recherche | Date d'achèvement de la recherche | Examinateur |
|---|---|---|
| LA HAYE | 30-05-1989 | KOLBE W.H. |

EPO FORM 1503 03.82 (P0402)